Europäisches Patentamt

(19) European Patent Office

Office européen des brevets

(11) **EP 0 934 550 B1**

(12) **EUROPÄISCHE PATENTSCHRIFT**

(45) Veröffentlichungstag und Bekanntmachung des Hinweises auf die Patenterteilung:
**12.07.2000 Patentblatt 2000/28**

(21) Anmeldenummer: **97945862.7**

(22) Anmeldetag: **21.10.1997**

(51) Int Cl.[7]: **G02F 1/29**, G02F 1/03

(86) Internationale Anmeldenummer:
**PCT/EP97/05808**

(87) Internationale Veröffentlichungsnummer:
**WO 98/18045 (30.04.1998 Gazette 1998/17)**

(54) **BRAGG-MODULATOR**

BRAGG MODULATOR

MODULATEUR DE BRAGG

(84) Benannte Vertragsstaaten:
**CH DE ES FR GB IT LI NL**

(30) Priorität: **22.10.1996 DE 19643489**

(43) Veröffentlichungstag der Anmeldung:
**11.08.1999 Patentblatt 1999/32**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **HINKOV, Vladimir**
**D-79199 Kirchzarten (DE)**
• **HINKOV, Iliyana**
**D-79199 Kirchzarten (DE)**

(56) Entgegenhaltungen:
**WO-A-96/07949**

• **LI J ET AL: "ELECTRO-OPTIC WAFER BEAM DEFLECTOR IN LITAO3" PROCEEDINGS OF THE SPIE, Bd. 2700, 29.Januar 1996, Seiten 73-77, XP002045311**
• **PATENT ABSTRACTS OF JAPAN vol. 018, no. 387 (P-1773), 20.Juli 1994 & JP 06 110024 A (NIPPON TELEGR & TELEPH CORP), 22.April 1994**
• **YAMADA M ET AL: "FIRST-ORDER QUASI-PHASE MATCHED LINBO3 WAVEGUIDE PERIODICALLY POLED BY APPLYING AN EXTERNAL FIELD FOR EFFICIENT BLUE SECOND-HARMONIC GENERATION" APPLIED PHYSICS LETTERS, Bd. 62, Nr. 5, 1.Februar 1993, Seiten 435-436, XP000335955**
• **YAMADA M ET AL: "ELECTRIC-FIELD INDUCED CYLINDICAL LENS, SWITCHING AND DEFLECTION DEVICES COMPOSED OF THE INVERTED DOMAINS IN LIBNO3 CRYSTALS" APPLIED PHYSICS LETTERS, Bd. 69, Nr. 24, 9.Dezember 1996, Seiten 3659-3661, XP000644110**

**Beschreibung**

Die Erfindung betrifft einen Bragg-Modulator zur Intensitätsmodulation eines Lichtstrahles, insbesondere eines Laserstrahles, bestehend aus einem auf seiner Oberseite rechteckförmigen elektro-optischen Kristallplättchen, insbesondere einem Lithiumniobat- oder Lithiumtantalat-Kristallplättchen, das über eine Gitterstruktur mit Normalbereichen und Inversionsbereichen verfügt, wobei in den Inversionsbereichen die Richtung der spontanen Polarisation gegenüber einer Normalrichtung in den Normalbereichen invertiert ist, und das mit einer auf der Oberseite des Kristallplättchens sowie mit einer auf der Unterseite des Kristallplättchens angeordneten Elektrode zur Erzeugung eines elektrischen Feldes versehen ist.

Es ist bekannt, zur Intensitätsmodulation von Laserstrahlen akusto-optische Bragg-Modulatoren einzusetzen. Ein solcher Bragg-Modulator besteht aus einem akusto-optischen Kristall, z.B. $Pb\,Mo\,O_4$ oder $Te\,O_2$, und einem Wandler. Mit Hilfe des Wandlers werden im akusto-optischen Kristall akustische Wellen mit einer Frequenz von 200 bis 300 MHz angeregt. Der durch den akusto-optischen Kristall hindurchtretende Laserstrahl wird von den akustischen Wellen gebeugt, wobei bei einer ausreichend großen akustischen Frequenz es möglich ist, lediglich ein Beugungsmaximum zu erhalten. In diesem Fall ist der Einfallswinkel der optischen Welle auf der akustischen Wellenfront gleich dem Bragg-Winkel $\Theta_B$. Es gilt:

$$\sin \Theta_B = 0{,}5\,\lambda_o/\Lambda_a n$$

mit der optischen Wellenlänge $\lambda_o$, der akustischen Wellenlänge $\Lambda_a$ und der relevanten Kristall-Brechzahl n. Die gebeugte Lichtintensität ist proportional zur akustischen Intensität und läßt sich mit der RF-Leistung am Wandler steuern.

Der akusto-optische Bragg-Modulator hat jedoch folgende Nachteile:
Es ist schwierig, eine schnelle, d.h. im ns-Bereich liegende Intensitätsmodulation zu erreichen, da die Schnelligkeit durch die Ausbreitungsgeschwindigkeit der akustischen Wellen begrenzt ist. Die Reaktionszeit des Modulators wird von der Zeitdauer bestimmt, die die akustische Welle braucht, um den Laserstrahl zu durchlaufen. Schnelle Schaltraten erfordern daher eine starke Fokussierung des Laserstrahles, um einen möglichst kurzen Weg für die akustischen Wellen zu erreichen. Die akustischen Wellen haben in den akusto-optischen Kristallen eine Geschwindigkeit $V_a$ von etwa 4000 m/s. Dies bedeutet, für eine Schaltrate von $t_s = 10$ ns müßte der Laserstrahl auf einen Spot mit einem Durchmesser $D = V_a \cdot t_s = 40$ µm fokussiert werden. Eine solche Anforderung macht das gesamte System mechanisch sehr empfindlich, und es bedarf spezieller Stabilisierungsmaßnahmen. Der Notwendigkeit, den Laserstrahl zu fokussieren, sind aber auch insofern Grenzen gesetzt, daß eine zulässige Lichtintensität nicht überschritten werden darf, da eine sehr hohe Energiedichte zu einer Zerstörung des Kristalls führen kann.

Darüber hinaus bedarf ein solcher akusto-optischer Bragg-Modulator einer vergleichsweise komplizierten Steuerelektronik, denn diese muß in der Lage sein, akustische Wellen mit einer Frequenz von 200 bis 300 MHz anzuregen und diese hohe Frequenz auch noch sehr schnell ein- und auszuschalten.

Fernerhin ist die Herstellungstechnologie des akusto-optischen Bragg-Modulators nicht planar und damit vergleichsweise kompliziert und teuer. So muß der als dünnes kristallines Lithiumniobat-Plättchen ausgebildete Wandler separat gefertigt und danach an den akusto-optischen Kristall geklebt werden, der selbst vergleichsweise teuer ist.

Schließlich ist zu vermerken, daß für den akusto-optischen Bragg-Modulator eine große RF-Steuerleistung von 1 bis 2 W notwendig ist. Die hohe Leistung kann zu einer inhomogenen Erwärmung des Kristalls führen, was wiederum Instabilitäten verursacht.

Es ist ferner ein Bragg-Modulator zur Intensitätsmodulation eines Lichtstrahles bekannt, der aus einem auf seiner Oberseite rechteckförmigen elektro-optischen Kristallplättchen besteht, das über eine Gitterstruktur mit Normalbereichen und Inversionsbereichen verfügt, wobei in den Inversionsbereichen die Richtung der spontanen Polarisation gegenüber einer Normalrichtung in den Normalbereichen invertiert ist, und das mit einer auf der Oberseite des Kristallplättchens sowie mit einer auf der Unterseite des Kristallplättchens angeordneten, die Gitterstruktur teilweise überdeckenden, Elektrode zur Erzeugung eines elektrischen Feldes versehen ist (WO 96/07949 A1). Bei diesem Bragg-Modulator verläuft die Gitterstruktur von der vorderen Stirnfläche des Kristallplättchens, an dem der Lichtstrahl eingekoppelt wird, bis zur hinteren Stirnfläche, an welcher der die Gitterstruktur passierende ungebeugte Lichtstrahl das Kristallplättchen verläßt. Der an der Gitterstruktur gebeugte Lichtstrahl trifft hier auf eine Seitenfläche des Kristallplättchens.

Nachteilig bei dieser Art Bragg-Modulator ist die Tatsache, daß der an der Seitenfläche austretende Lichtstrahl wenn überhaupt sehr eingeschränkt nutzbar ist, da der in einem verhältnismäßig kleinen Winkel auf die Seitenfläche treffende gebeugte Lichtstrahl dort sehr große Reflexionsverluste (bis hin zur totalen internen Reflexion) erfährt. Der größtenteils (oder ganz) an dieser Seitenfläche reflektierte Lichtstrahl kann darüber hinaus in nachteiliger Weise durch Überlagerung mit dem ungebeugten Lichtstrahl zu ungewünschten Interferenzen und damit Störsignalen führen.

Der Erfindung liegt daher die Aufgabe zugrunde, einen Bragg-Modulator der eingangs genannten Art anzugeben, der frei von den vorgenannten Nachteilen ist.

Diese Aufgabe wird erfindungsgemäß durch den in Anspruch 1 definierten Bragg - Modulator gelöst.

Vorzugsweise Ausführungsformen der Erfindung sind Gegenstand der Unteransprüche.

Der erfindungsgemäß ausgebildete elektro-optische Bragg-Modulator hat den Vorteil, daß nicht nur der ungebeugte Lichtstrahl sondern auch der gebeugte Lichtstrahl an der hinteren Stirnfläche des Kristallplättchens austritt, wobei letzterer unter einem vergleichsweise großen Winkel auf diese Stirnfläche trifft und somit die dort auftretenden Reflexionsverluste sehr klein bleiben. Während es beim elektro-optischen Bragg-Modulator nach dem Stand der Technik notwendig ist, zumindest auch eine der beiden Seitenflächen optisch zu polieren, was die Herstellungstechnologie erschwert, genügt es beim erfindungsgemäßen Bragg-Modulator, wenn die vordere und die hintere Stirnfläche des Kristallplättchens optisch poliert sind.

Der erfindungsgemäße Bragg-Modulator zeichnet sich auch dadurch aus, daß hier die Elektroden die gesamte Gitterstruktur überdecken, was eine volle Ausnutzung des Gitters erlaubt.

Schließlich bringt die Idee, das Kristallplättchen mit einer Gitterstruktur zu versehen, die nicht von der vorderen bis zur hinteren Stirnfläche, d.h. über das gesamte Kristallplättchen verläuft, sondern die von den Seiten- und Stirnflächen beabstandet ist, den Vorteil, daß die bei der Herstellung der Gitterstruktur ansonsten auftretenden Probleme vermieden sind, insofern als die zur Strukturierung verwendeten Elektroden nicht bis zum Kristallplättchenrand reichen müssen und somit elektrische Überschläge im Randbereich zwischen diesen Elektroden beim Anlegen der vergleichsweise großen elektrischen Felder von vornherein ausgeschlossen sind.

Gegenüber akusto-optischen Bragg-Modulatoren kann ein solcher elektro-optischer Bragg-Modulator mit einer völlig planaren Technologie vergleichsweise kostengünstig hergestellt werden. Die Schaltgeschwindigkeit ist lediglich durch die Kapazität der Struktur begrenzt. Es können daher sehr hohe Schaltgeschwindigkeiten erreicht werden. Wird der erfindungsgemäße Bragg-Modulator zur Intensitätsmodulation eines Laserstrahles eingesetzt, so muß dieser nicht fokussiert werden, so daß diese Lösung mechanisch sehr stabil ist und aufwendige zusätzliche Stabilisierungsmaßnahmen entbehrlich sind. Es sind im Vergleich zum Einsatz von akusto-optischen Bragg-Modulatoren auch höhere Laserleistungen zulässig. Außerdem bedarf der erfindungsgemäße elektro-optische Bragg-Modulator nur einer verhältnismäßig niedrigen RF-Steuerleistung. Zudem ist die Steuerelektronik weniger aufwendig. Es kann direkt mit der Schaltfrequenz moduliert werden.

Die Erfindung soll nachstehend anhand eines Ausführungsbeispiels und einer zugehörigen Zeichnung näher erläutert werden. In der Zeichnung zeigen jeweils schematisch:

Figur 1    einen akusto-optischen Bragg-Modulator nach dem Stand der Technik und

Figur 2    einen erfindungsgemäßen elektro-optischen Bragg-Modulator.

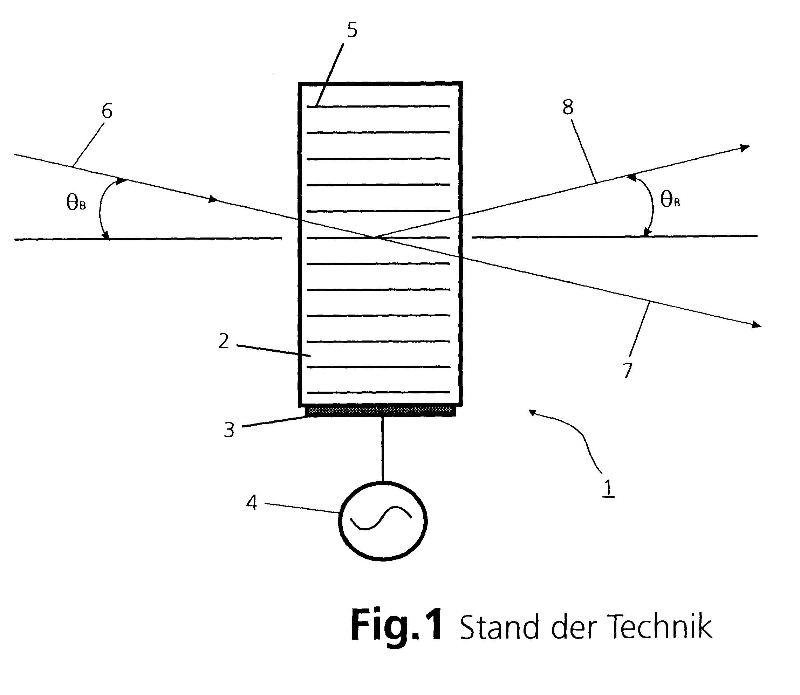

Der in Figur 1 schematisch dargestellte bekannte Bragg-Modulator 1 setzt sich aus einem akusto-optischen Kristall 2, z.B. aus $Pb\,Mo\,O_4$ oder aus $Te\,O_2$, und einem beispielsweise aus einem Lithiumniobat-Plättchen bestehenden Wandler 3 zusammen, der mit einer RF-Quelle 4 verbunden ist. Werden im akusto-optischen Kristall 2 mit Hilfe des Wandlers 3 akustische Wellen mit einer Frequenz in der Größenordnung von 200 bis 300 MHz angeregt, so wird ein durch den akusto-optischen Kristall 2 hindurchtretender Laserstrahl an den akustischen Wellen gebeugt. In der Zeichnung bezeichnen 6 einen bezüglich einer Wellenfront 5 der akustischen Wellen im Bragg-Winkel $\Theta$ einfallenden Laserstrahl, 7 den ungebeugten und 8 den gebeugten Laserstrahl. Die Intensität des gebeugten Laserstrahls 8 ist proportional zur Intensität der akustischen Wellen und läßt sich mit der RF-Leistung am Wandler 3 steuern. Ein solcher Bragg-Modulator 1 hat jedoch die vorgenannten Nachteile, insbesondere sind Schaltzeiten in der Größenordnung von 10 ns nur mit einem vergleichsweise großen Aufwand und kürzere Schaltzeiten praktisch nicht erreichbar.

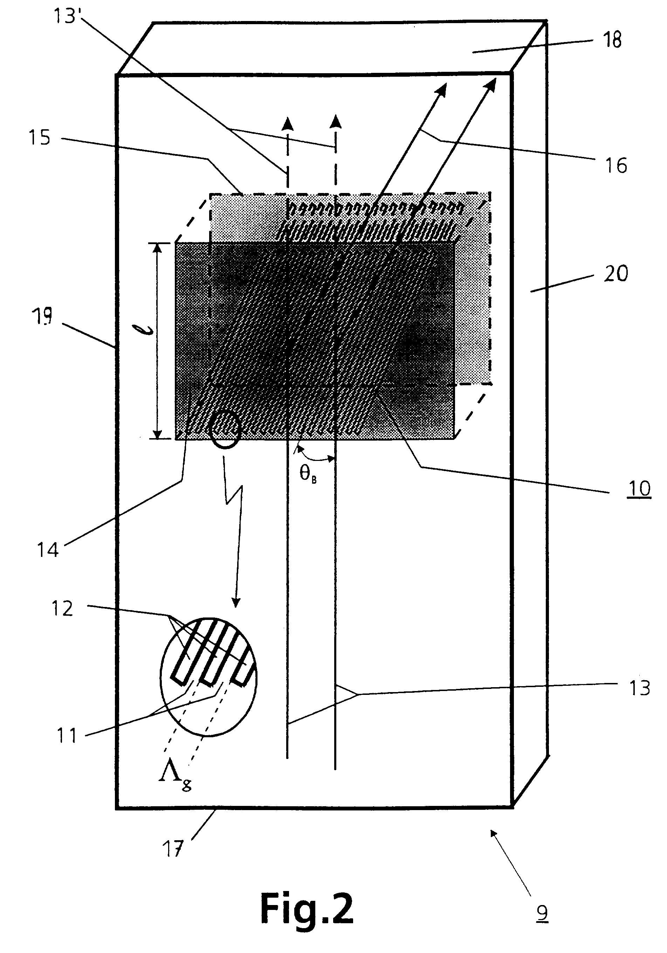

Der in Figur 2 schematisch dargestellte erfindungsgemäße elektro-optische Bragg-Modulator 9 weist diese Nachteile nicht auf. Der Bragg-Modulator 9 besteht aus einem auf seiner Oberseite rechteckförmigen elektro-optischen Kristall, z.B. einem Lithiumniobat- oder Lithiumtantalatkristallplättchen, in dem eine Gitterstruktur 10 erzeugt ist. Die Gitterstruktur 10 besteht aus Normalbereichen 11 und Inversionsbereichen 12, wobei in den Inversionsbereichen 12 die Richtung der spontanen Polarisation gegenüber einer Normalrichtung in den Normalbereichen 11 invertiert ist.

Die Inversion der Richtung der spontanen Polarisation in den Kristalldomänen kann mit einem bekannten Verfahren erreicht werden. Praktisch wird dabei lokal, d.h. in bestimmten Bereichen, die optische c-Achse im Kristall um 180° gedreht. Dies gelingt z.B. auf einem +Z-Schnitt-Lithiumniobatkristall (eine Inversion ist auch auf einem -Z-Schnitt-Lithiumniobatkristall möglich) durch das Auftragen einer Titan-Schicht und anschließendes Aufheizen auf über 1000°C. Die Tiefe des invertierten Bereiches kann dabei bis zu 1 mm betragen. Die geometrische Gestalt des invertierten Bereiches kann mit Hilfe eines photolithographischen Strukturierungsprozesses sehr präzise ausgeführt werden.

Die bezüglich der Oberseite des Kristallplättchens in ihrer Form als schmale Rechtecke ausgebildeten Inversionsbereiche 12 und die dazwischenliegenden, die nämliche Gestalt aufweisenden Normalbereiche 11 sind so angeordnet, daß die Schmalseiten dieser Rechtecke zu einem in den Kristall eingekoppelten Laserstrahl 13 einen Winkel bilden, der größer als Null und kleiner 90° ist. Die gewählte Gitterperiode der aus den Normalbereichen 11 und Inversionsbereichen 12 bestehenden Gitterstruktur 10 ist wellenlängenabhängig und kann z.B. 10 bis 15 µm betragen. Um eine Wechselwirkung vom Bragg-Typ zu realisieren, soll der sogenannte Raman-Nath-Faktor Q >> 1 sein. Für den Raman-Nath-Faktor gilt die Beziehung $Q = 2 \pi \mid \lambda_o / \Lambda_g^2 n$. Dabei bedeuten | die Länge der Wechselwirkung, $\lambda_o$ die optische Wellenlänge, $\Lambda g$ die Gitterperiode und n die Kristallbrechzahl. Für die Parameter $\Lambda_g = 10 \cdot 10^{-6}$m; $\lambda_o = 0,633 \cdot 10^{-6}$m, n = 2,2 und $l = 6 \cdot 10^{-3}$m, die technologisch ohne weiteres realisierbar sind, erhält man für $Q \cong 110 >> 1$, d.h. die Wechselwirkung ist wie gewünscht vom Bragg-Typ. Für die Lichtführung des Laserstrahles 13 kann das Lithiumniobat-Kristallplättchen in seiner gesamten Dicke oder aber ein im Bereich der Kistallplättchen-Oberseite eingebrachter optischer Wellenleiter genutzt werden. Die Gitterstruktur 10 ist von einer auf der Oberseite und von einer auf der Unterseite des Kristallplättchens aufgebrachten rechteckförmigen Elektrode 14 bzw. 15 vollständig überdeckt.

Die Gitterstruktur 10 ist so im Kristallplättchen angeordnet, daß sie weder bis an die Stirnflächen 17, 18 noch bis an die Seitenflächen 19, 20 des Kristallplättchens reicht.

Das Kristallplättchen ist vorzugsweise so geschnitten, daß dessen optische Achse bezüglich der Lichtausbreitungsrichtung des senkrecht auf die vordere Stirnfläche 17 des Kristallplättchens treffenden Lichtstrahles 13 senkrecht orientiert ist.

Der Bragg-Modulator 9 funktioniert wie folgt: Wird an den Elektroden 14 und 15 eine elektrische Spannung angelegt, so werden infolge des elektro-optischen Effektes Brechzahländerungen $\Delta n$ erzeugt und zwar sowohl in den Normalbereichen 11 als auch in den Inversionsbereichen 12, jedoch mit entgegengesetztem Vorzeichen. Es entsteht somit eine periodische Struktur, die eine Beugung des an der vorderen Stirnfläche 17 des Kristallplättchens eingekoppelten Laserstrahles 13 verursacht. Fällt der Laserstrahl 13 auf diese periodische Gitterstruktur 10 unter dem Braggwinkel $\Theta_B$, so wird ausgangsseitig und zwar an der hinteren Stirnfläche 18 am Kristallplättchen nur ein einziges Beugungsmaximum beobachtet. Die Intensität des gebeugten, in der Zeichnung mit 16 bezeichneten Laserstrahles steigt mit dem Anwachsen von $\Delta n$ und ist somit proportional zur an den Elektroden 14 und 15 angelegten Spannung. 13' bezeichnet den die Struktur 10 passierenden an der hinteren Stirnfläche 18 austretenden ungebeugten Laserstrahl, wenn keine Spannung an den Elektroden 14 und 15 liegt.

Die Schaltgewindigkeit des Bragg-Modulators 9 ist nur durch die Kapazität der Struktur begrenzt und kann sehr hohe Werte erreichen. Die Kapazität der Elektrode $C_{el}$ berechnet sich nach der Formel:

$$C_{el} = (b \cdot l / d)\varepsilon \; \varepsilon_o.$$

Geht man davon aus, daß die Elektrode eine Länge von l = 5 mm und eine Breite von b = 2 mm hat, das Lithiumniobat-Plättchen eine Dicke von d = 0,5 mm aufweist sowie $\varepsilon_o = 8,85 \cdot 10^{-12}$ F/m und $\varepsilon = 30$ betragen, so wird $C_{el} = 5,31 \cdot 10^{-12}$ F. Für einen Abschlußwiderstand von R = 50 Ω erhält man dann für die 3 dB Bandbreite: $\Delta f_{3dB}$ = 1,2 GHz. D.h. die Schaltrate ist kleiner 1 ns.

## Patentansprüche

1. Bragg-Modulator zur Intensitätsmodulation eines Lichtstrahles, insbesondere eines Laserstrahles, bestehend aus einem elektro-optischen Kristallplättchen, insbesondere einem Lithiumniobat- oder Lithiumtantalatkristallplättchen, mit einer vorderen Stirnfläche (17), mit einer hinteren Stirnfläche (18) und einer rechteckförmigen Oberseite, das über eine Gitterstruktur (10) mit Normalbereichen (11) und Inversionsbereichen (12) verfügt, wobei in den Inversionsbereichen (12) die Richtung der spontanen Polarisation gegenüber einer Normalrichtung in den Normalbereichen (11) invertiert ist, und das mit einer auf der Oberseite des Kristallplättchens sowie mit einer auf der Unterseite des Kristallplättchens angeordneten Elektrode (14 bzw. 15) zur Erzeugung eines elektrischen Feldes versehen ist, **dadurch gekennzeichnet,** daß die Gitterstruktur (10) beabstandet von Stirn- und Seitenflächen (17, 18 und 19, 20) des Kristallplättchens angeordnet und vollständig von den Elektroden (14 bzw. 15) überdeckt ist, daß die Inversionsbereiche (12) der Gitterstruktur so angeordnet sind, daß für eine vorgegebene Richtung des an der vorderen Stirnfläche (17) in das Kristallplättchen eingekoppelten Lichtstrahles (13) die Gitterstruktur im Braggwinkel ($\Theta_B$) angeordnet ist und die gesamte Gitterstruktur (10) so plaziert ist, daß der gebeugte Lichtstrahl (16) das Kristallplättchen an seiner hinteren Stirnfläche (18) verläßt.

2. Bragg-Modulator nach Anspruch 1, **dadurch gekennzeichnet,** daß zur Lichtführung ein im Bereich der Kristallplättchenoberseite in den Kristall eingebrachter optischer Wellenleiter vorgesehen ist.

3. Bragg-Modulator nach Anspruch 1 oder 2, **dadurch gekennzeichnet,** daß die Gitterperiode ($\Lambda_g$) der aus den Normalbereichen (11) und den Inversionsbereichen (12) bestehenden Gitterstruktur (10) 10 bis 15 µm beträgt.

4. Bragg-Modulator nach einem der Ansprüche 1 bis 3, **dadurch gekennzeichnet,** daß das Kristallplättchen so geschnitten ist, daß dessen optische Achse bezüglich der Lichtausbreitungsrichtung des senkrecht auf die vordere Stirnfläche (17) des Kristallplättchens treffenden Lichtstrahles (13) senkrecht orientiert ist.

## Claims

1. A Bragg modulator for modulating the intensity of a light beam, especially of a laser beam, consisting of an electro-optical crystal wafer, especially a lithium niobate or lithium tantalate crystal wafer, with a front end face (17), a rear end face (18) and a rectangular top, which has a grating structure (10) with normal regions (11) and inversion regions (12), wherein the direction of spontaneous polarisation is inverted in the inversion regions (12) compared with a normal direction in the normal regions (11), and which is provided, for generation of an electric field, with an electrode (14) disposed on the top of the crystal wafer and with an electrode (15) disposed on the bottom of the crystal wafer, characterized in that the grating structure (10) is spaced from end and side faces (17, 18 and 19,20) of the crystal wafer and is completely covered by the electrodes (14 and 15), in that the inversion regions (12) of the grating structure are so arranged that, for a predetermined direction of the light beam (13) coupled into the crystal wafer at the front end face (17), the grating structure is disposed at the Bragg angle ($\Theta_B$) and the entire grating structure (10) is so positioned that the diffracted light beam (16) leaves the crystal wafer at its rear end face (18).

2. A Bragg modulator according to claim 1, characterized in that an optical waveguide disposed in the crystal in the region of the top of the crystal wafer is provided to guide the light.

3. A Bragg modulator according to claim 1 or 2, characterized in that the grating period ($\Lambda_g$) of the grating structure (10) consisting of the normal regions (11) and the inversion regions (12) is 10 to 15 $\mu$m.

4. A Bragg modulator according to any of claims 1 to 3, characterized in that the crystal wafer is so cut that its optical axis is oriented perpendicular to the light propagation direction of the light beam (13) impinging perpendicularly on the front end face (17) of the crystal wafer.

## Revendications

1. Modulateur de Bragg pour moduler l'intensité d'un faisceau lumineux notamment d'un faisceau laser, comprenant une plaquette de cristal électro-optique, notamment une plaquette de cristal de niobate de lithium ou de tantalate de lithium, avec une surface avant (17), et une surface arrière (18) et une face supérieure rectangulaire, cette plaquette ayant une structure de réseau (10) avec des zones normales (11) et des zones d'inversion (12), et dans les zones d'inversion (12), la direction de polarisation spontanée est inversée par rapport à la direction normale dans les zones normales (11) et, la surface du dessus de la plaquette de cristal et la surface du dessous de la plaquette de cristal comportent des électrodes (14, 15) pour créer un champ électrique, caractérisé en ce que

   - la structure de réseau (10) est écartée des surfaces frontales et latérales (17, 18 et 19, 20) de la plaquette de cristal et elle est complètement recouverte par les électrodes (14, 15),
   - les zones d'inversion (12) de la structure de réseau sont disposées de telle manière que pour une direction prédéterminée du faisceau de lumière (13) injecté par la face avant (17) de la plaquette de cristal, la structure de réseau se trouve dans l'angle de Bragg ($\Theta_B$), et
   - l'ensemble de la structure de réseau (10) est disposé pour que le faisceau de lumière (16) dévié quitte la plaquette de cristal par sa face arrière (18).

2. Modulateur de Bragg selon la revendication 1, caractérisé en ce qu'un guide d'onde optique intégré dans le cristal est prévu pour guider la lumière dans la zone de la face supérieure de la plaquette de cristal.

3. Modulateur de Bragg selon la revendication 1 ou 2, caractérisé en ce que la période de réseau ($\Lambda$g) de la structure de réseau (10) composée de zones normales (11) et de zones d'inversion (12) est de 10 à 15 $\mu$m.

4. Modulateur de Bragg selon l'une des revendications 1 à 3, caractérisé en ce que la plaquette de cristal est taillée pour que son axe optique soit orienté perpendiculairement par rapport à la direction d'extension de la lumière du faisceau lumineux (13) arrivant perpendiculairement sur la face avant (17) de la plaquette de cristal.

EP 0 934 550 B1

**Fig.1** Stand der Technik

**Fig.2**